# EUROPÄISCHE PATENTANMELDUNG

(11) **EP 0 631 949 A2**
(43) Veröffentlichungstag der Anmeldung: **04.01.1995**
(21) Anmeldenummer: 94110258.4
(22) Anmeldetag: 01.07.1994
(51) Int. Cl.: B65D 81/05, B68G 1/00

(54) **Verfahren zum Herstellen von Packmitteln**

(30) Priorität: 02.07.1993 DE 4322000
(71) Anmelder: Fath, Ulrich, D-35396 Giessen (DE)
(72) Erfinder: Fath, Ulrich, D-35396 Giessen (DE)
(74) Vertreter: Olbricht, Karl Heinrich, Dipl.-Phys.

(57) **Zusammenfassung**

Zum Herstellen von Packmitteln insbesondere in Form flacher Weichplatten, die eine aus zerkleinertem Wellpappeabfall, Holz- oder Papierwolle u.dgl. gewonnene Füllung in einer verschlossenen Papierhülle enthalten, einem Wellpappeabfall vorzugsweise im Verhältnis 1:2 Papier beigemischt wird, das durch zumindest einen Schneidvorgang in schmälere Streifen von z.B. 1,5 cm bis 4,5 cm Länge zerkleinert und gewellt worden ist, worauf man die Mischung dosiert in die zuvor einseitig mit Polyethylen beschichtete Papierhülle bringt und diese durch Heißsiegeln verschließt. Die Papierumhüllung besteht aus einseitig glattem Kraftpapier mit einer Stärke von mindestens 40 g/m², das gegebenenfalls zuvor bedruckt wurde. Der Papierabfall kann in aufeinanderfolgenden Schneidvorgängen auf etwa gleiche Schnitzelgröße wie separat zugeführte Wellpappeschnitzel zerkleinert werden, wobei die erhaltenen Papier- und Wellpappe-Schnitzel in einstellbarem Verhältnis gemischt, dosiert in oder auf eine Förderstrecke gebracht, zu elastisch-schmiegsamen Schnitzelkörpern vorgeformt und anschließend in einer abwischbaren Papierhülle eingeschlossen werden.

## Beschreibung

Die Erfindung betrifft ein Verfahren zum Herstellen von insbesondere kissenförmigen Packmitteln gemäß dem Oberbegriff von Anspruch 1.

Herkömmliche Packmittel werden in den unterschiedlichsten Ausgestaltungsformen für Verpackungszwecke verwendet. Man benutzt insbesondere Polsterkissen, Hartschaumplatten und andere flächige oder stückige Füllkörper vielfach in Boxen, Kartons o.dgl. zum Auskleiden der Wandungen und Ecken sowie zum Auffüllen von Hohlräumen rund um zu verpackende Artikel. Damit Gegenstände mit empfindlichen, leicht zu beschädigenden Oberflächen sicher transportiert werden können, müssen die Packmittel, um zahlreichen dabei auftretenden Problemen gerecht zu werden, eine hohe Druckwiderstandsfähigkeit haben, außerdem aber anschmiegsam und weich sein. Darüberhinaus sollen die Packmittel mehrfach wiederverwendbar sein, bevor sie umweltverträglich entsorgt und/oder recycelt bzw. aufbereitet werden.

Aus DE-C-613 147 sind Polster bekannt, die unter Verwendung von Wellpappeabfällen hergestellt werden. Diese werden grob zerfasert und in glatten Deckbahnen eingeschlossen oder vollständig mit einer glatten Papierhülle umgeben. Aufgrund der Struktur der Wellpappefasern sind derartige Packkissen zwar recht steif, jedoch nur wenig anschmiegsam, wenngleich die Druckwiderstandsfähigkeit relativ hoch sein kann. Beim Verpacken von druckempfindlichen Gegenständen mit unregelmäßigen Oberflächen können sich Schwierigkeiten ergeben, weil sich die Polsterkissen der Form des betreffenden Gegenstands nicht oder nur unzureichend anpassen und ihn daher nur punktuell abstützen. Beschädigungen sind die kaum vermeidbare Folge.

Bei einem kissenartigen Verpackungspolster, wie es aus DE-U-1 869 352 bekannt ist, wird eine im wesentlichen aus einer schlauchförmigen Kunststoff-Folie bestehende Umhüllung mit Holzwolle oder mit einem anderen geeigneten faserigen Stoff gefüllt. Die Enden des Kunststoffschlauchs werden durch Kleben, Thermobehandlung o.dgl. flüssigkeitsdicht verschweißt, damit keine Feuchtigkeit eindringt, die das Füllmaterial zersetzen könnte. In DE-U-1 793 644 ist eine Verpackung beschrieben, die eine Hülle aus einer Kunststoff-Folie, Papier o.dgl. aufweist und mit einer Füllung aus Holz- oder Papierwolle versehen wird. Solches Material besitzt zwar gute Dämpfungseigenschaften, läßt sich aber nicht problemlos in eine Hülle einfüllen. Zudem sind mit Holzwolle gefüllte Polsterkissen in der Regel sehr steif und dadurch nur wenig anschmiegsam. Bei Verwendung von Papierhüllen besteht die Gefahr, daß sie von den Halmen bzw. Spänen der Holzwolle durchstoßen werden. Weitere Nachteile ergeben sich bei der Entsorgung, da Kunststoff-Folie umständlich von der Holzwolle entfernt werden muß, die lediglich kompostierbar ist. Eine Wiederverwertung der Verpackungspolster ist nicht ohne weiteres möglich.

In DE-C-3 839 225 ist ein Verfahren zur Herstellung eines stoßdämpfenden Verpackungspolsters angegebenen, dessen Füllung ein umweltschonendes abbaubares Naturmaterial in einem aus reißfesten Papierstreifen gefertigten Hüllmaterial aufweist. Damit das verwendete Stroh oder ähnliches halmförmiges Füllmaterial die Außenhülle nicht beschädigt, wird es gekürzt und durch Mahlen der Länge nach aufgespalten. Anschließend wird es in Haufen auf den Papierstreifen aufgesetzt, der um zueinander parallel verlaufende Linien zu einem Schlauch gebogen wird. Die freien, überstehenden Randbereiche werden durch Kleben, Rändeln oder Nähen flächig miteinander verbunden. Dabei läßt es sich nicht immer vermeiden, daß Füllmaterial zwischen die Randbereiche gelangt. Die Polster sind zwar vollständig kompostierbar, nicht aber wiederverwertbar und auch nicht feuchtigkeitsfest.

EP-A-0 453 746 beschreibt ein kugelförmiges Verpackungsmaterial zum Ausfüllen von Hohlräumen in festen Behältern, das eine Außenhülle aus grobporigem, gut luftdurchlässigem, dünnem Papier hat, von dem durch Reißwölfen o.dgl. zerkleinerte Papierabfälle (Schnipsel) umschlossen werden. Nachteilig hierbei ist jedoch, daß sich die relativ kleinen, z.B. nur 12 mm langen und 2 mm schmalen Papierschnitzel bei Belastung platt aufeinanderlegen, was nahezu keine Federwirkung zuläßt. Darüberhinaus neigen die lose in der Umhüllung befindlichen Schnipsel schon bei geringer Druckeinwirkung dazu, sich auf einer Seite des Polsters zu konzentrieren, so daß die ohnehin mäßige Dämpfwirkung stellenweise ganz fehlen kann. Empfindliche Gegenstände wie z.B. Meßinstrumente oder Glasapparaturen werden dann nur höchst unzureichend gegen Stöße geschützt. Die dünne Papier-Außenhülle kann infolge ihrer Grobporigkeit sehr leicht beschädigt werden. Eine mehrfache Verwendung ist daher selten möglich.

Die gleichen Probleme ergeben sich mit einem in DE-A-3 900 874 offenbarten Füllstoff für nachgiebige Behälter mit flexiblem Umhüllungsmaterial. Großflächiges Papier wird zerstückelt, zerissen oder in ähnlicher Weise zu mehr oder weniger langen Papierfasern zerkleinert bzw. zerschnitten und lose oder zu kleineren kompakten Stücken gepreßt in eine flexible Umhüllung z.B. aus textilem Gewebe, Papierfasergebilden oder Mischungen von solchen Fasern eingefüllt. Für die Herstellung der Papierfasern schneidet eine rotierende Messertrommel von einer fortlaufend mittels Preßketten vorgeschobenen verdichteten Papiermasse Schichten von Papierfasern ab. Alternativ kann auch ein Guillotinenschneider verwendet werden. Die auf diese Weise entstehenden Fasern sind sehr dünn und besitzen folglich keine gute Federwirkung.

Zur Abhilfe gegen die bestehenden Unzulänglichkeiten muß die Herstellung von Packmitteln neu überdacht und ein vom bisher Bekannten abweichender Weg beschritten werden. Ziel der Erfindung ist es daher, ein kostengünstiges Verfahren dahingehend zu schaffen, daß
+ die hergestellten Packmittel sowohl hohe Druckwiderstandsfähigkeit als auch gute Anschmiegsamkeit aufweisen,
+ die Füllmaterialien formstabil und gleichmäßig in einem Verpackungspolster verteilt sind und bleiben,
+ die Polster schmutzabweisend und vielfach wiederverwendbar sind und
+ verbrauchtes Packmateriel einem Recycling-Kreislauf zuführbar ist.

Zur Lösung dieser komplexen Aufgabe sieht die Erfindung die in den unabhängigen Ansprüchen 1 und 10 angegebenen Merkmale vor. Ausgestaltungen sind Gegenstand der Ansprüche 2 bis 9 sowie 11.

Bei einem Verfahren zum Herstellen von insbesondere matten- oder kissenförmigen Packmitteln, die eine aus zerkleinertem Wellpappeabfall, Holz- oder Papierwolle o.dgl. gewonnene Füllung in einer verschlossenen Papierhülle enthalten, wird erfindungsgemäß dem Wellpappeabfall Papier beigemischt, das durch zumindest einen Schneidvorgang zerkleinert und gewellt worden ist, worauf man die Mischung dosiert in die zuvor wasserabweisend beschichtete Papierhülle bringt und diese verschließt. Die guten Dämpfungseigenschaften der Wellpappe werden so mit der Anschmiegsamkeit von gewellten Papierschnipseln kombiniert, wodurch sich ein elastisch-schmiegsames Polster mit guten Federungseigenschaften ergibt. Die in sich weichelastischen Papierabfälle sorgen dafür, daß der Packkörper nachgiebig ist und sich den Konturen des zu verpackenden Gegenstands optimal anpaßt. Der Wellpappeanteil hingegen gewährleistet, daß die Polster ihre Federungseigenschaften länger behalten und die Papierabfälle auch nach mehrfachem Gebrauch nicht platt aufeinandergepreßt sind. Eine Mehrfachverwendung ist problemlos möglich. Durch die wasserabweisend beschichtete Papierhülle erhält das Packmaterial hohe Dauerhaftigkeit; leichte Verschmutzungen können auch feucht abgewischt werden.

Gemäß Anspruch 2 liegt das Mischungsverhältnis von Wellpappeabfällen und Papier zwischen 1:1 und 1:4, vorzugsweise bei 1:2, so daß die Elastizitätseigenschaften der Verpackungspolster an unterschiedlichste Bedürfnisse angepaßt werden können.

Eine wichtige Maßnahme der Erfindung besteht laut Anspruch 3 darin, daß das für die Papierhülle verwendete Papier mit Polyethylen beschichtet wird, insbesondere in einer spezifischen Schichtstärke von wenigstens 12 g/m². Die Umhüllung wird dadurch äußerst stabil sowie reißfest und widerstandsfähig auch gegen Sprüh- oder Spritzwasser und ähnliche Feuchteeinwirkungen.

Gemäß Anspruch 4 erfolgt die Beschichtung zumindest auf Teilflächen der Papierhülle, bevorzugt einseitig, nämlich auf der Hüllen-Außenseite.

Die Ausgestaltung von Anspruch 5 sieht vor, für die Papierumhüllung einseitig glattes Kraftpapier mit einer Stärke von mindestens 40 g/m² zu verwenden. Dadurch ergibt sich eine hohe Festigkeit der Hülle, die elastisch-stabilisierend ist. Infolge weitgehender Luftundurchlässigkeit ist das Füllmaterial sicher vor Feuchtigkeit geschützt. Zusätzliche Imprägnierungen oder sonstige Schutzmaßnahmen sind nicht notwendig.

Um einen schnellen und einfachen Herstellungsprozeß zu gewährleisten, wird die Papierumhüllung gemäß Anspruch 6 durch Heißsiegeln verschlossen. Vor dem Befüllen kann die Papierumhüllung laut Anspruch 7 bedruckt werden, was Kennzeichnungen, Werbung u.dgl. erlaubt. Bevorzugt gibt man dem Packmittel nach Anspruch 8 die allgemeine Form einer flachen Platte.

Um eine den praktischen Anforderungen entsprechende Wellenform zu erhalten, wird das Papier gemäß Anspruch 9 in lange Streifen mit einer Breite von z.B. 0,5 cm bis 1 cm zerteilt und anschließend z.B. auf 1,5 bis 4,5 cm Länge gekürzt.

Eine wichtige Ausgestaltung der Erfindung geht aus dem unabhängigen Anspruch 10 hervor. Danach wird bei einem Verfahren zum Herstellen von insbesondere matten- oder kissenförmigen Packmitteln, die eine aus zerkleinertem Wellpappeabfall, Holz- oder Papierwolle u.dgl. gewonnene Füllung in einer verschlossenen Papierhülle enthalten, Papierabfall erfindungsgemäß in aufeinanderfolgenden Schneidvorgängen auf etwa gleiche Schnitzelgröße wie separat zugeführte Wellpappeschnitzel zerkleinert, wobei die erhaltenen Papier und Wellpappe-Schnitzel in einstellbarem Verhältnis gemischt, in oder auf eine Förderstrecke gebracht und zu elastisch-schmiegsamen Schnitzelkörpern vorgeformt werden, worauf diese in einer abwischbaren Papierhülle eingeschlossen werden. Im Gegensatz zu herkömmlichen Verfahren und Anordnungen, bei denen die Füllung lose in der Hülle einliegt, kann das zu Schnitzelkörpern vorgeformte Material in der Umhüllung nicht verrutschen, was einen bedeutsamen Vorteil für die praktische Verwendung darstellt.

Eine vorteilhaft Weiterbildung ist in Anspruch 11 angegeben. Hiernach werden in die laufend erzeugten und einer Förderstrecke insbesondere senkrechten zugeführten Papierstreifen bzw. -schnitzel durch einen Leimsprüh-Vorhang hindurch die Wellpappeschnitzel mit einem Querluftstrom eingeschossen. Das Schnitzelgemisch wird sodann in einem mit Formungsflächen, z.B. glatten Gleitblechen, versehenen Ablaufkanal zu Vorkörpern von Matten- oder Kissengestalt geformt, die abschnittsweise in der Papierhülle festgelegt werden, worauf diese versiegelt wird. Dadurch, daß an den Wellpappeschnitzeln Leim haftet, verbinden diese sich zumindest punktuell mit den Papierschnitzeln und mit der Hülle, so daß eine noch bessere Verfestigung der Vorkörper erzielt und das Packmittel insgesamt ohne Einbuße an Elastizität und Schmiegsamkeit bequem zu handhaben ist. Durch die Verbindung der Wellpappe- und Papierschnitzel untereinander wird außerdem die Eigensteifigkeit des Vorkörpers und damit des Kissens insgesamt erhöht.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: ein schematisches Flußdiagramm eines Verfahrens zum Herstellen von Packmittel und
- Fig. 2: eine schematische Darstellung einer Füllung.

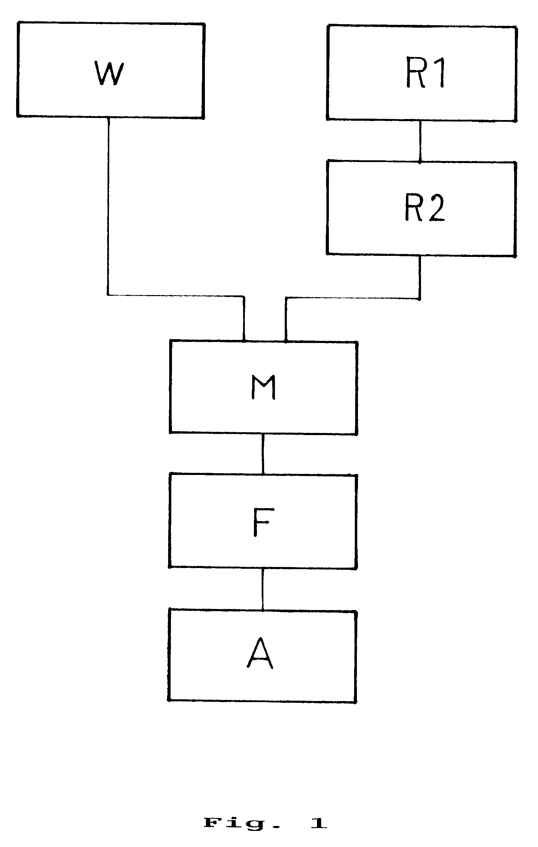

Fig. 1 enthält ein Flußdiagramm einer bevorzugten Ausführungsform des erfindungsgemäßen Verfahrens. Wellpappeabfälle werden in herkömmlicher Weise mit einer Schneidvorrichtung W grob zerfasert, während parallel dazu zwei Schneidvorrichtungen R1, R2 Papierabfälle mit Walzmessern zerschneiden. Die erste Schneidvorrichtung R1 zerteilt beispielsweise in größeren Bögen zugeführte Papier in etwa 0,5 cm bis 1 cm schmale Streifen, die anschließend von der zweiten Schneidvorrichtung R2 auf 1,5 cm bis 4,5 cm kurze Stücke abgelängt werden. Durch das Zerteilen der Papierabfälle in zwei unmittelbar hintereinander angeordneten Schneitwerken mit rotierenden Messerwalzen erzielt man auf einfache Art und Weise gewellte Papierschnipsel. Diese und die zerteilten Wellpappeabfälle werden anschließend in einer Mischvorrichtung M miteinander vermengt, was am einfachsten durch passend geführte Luftverwirbelung geschehen kann. In einer Förderstrecke F wird das Füllgemisch einer Abfüllvorrichtung A zugeführt, in der die Papierhüllen bei vorgegebener Länge mit dosierter Füllung versiegelt werden.

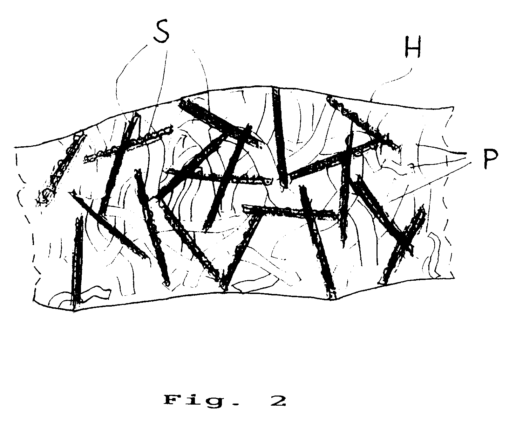

Das entstandene Produkt kann beispielsweise eine Struktur haben, wie in Fig. 2 schematisch dargestellt. Man erkennt, daß eine Zufallsanordnung von Papierschnitzeln P und mit ihnen verhakten Wellpappeschnitzeln S in einer Papierhülle H zusammengehalten ist. Der vorzugsweise flache Formkörper hat infolge der Wellpappeschnitzeln S eine gewisse Eigensteifigkeit, während die Papierschnitzel P eine hohe Anschmiegsamkeit gewährleisten. Die vorzugsweise innen glatte Papierhülle H hat außen eine (nicht gezeichnete) Polyethylen-Beschichtung, welche die wasserabweisenden Eigenschaften und damit eine Abwischbarkeit des Packmiftels ermöglicht.

Wesentliche Vorteile der Efindung beruhen auf der wirtschaftlichen Herstellbarkeit der verbesserten Packmittel, die voll recycelbar sind. Das gilt ebenso für den benutzten Leim, der bevorzugt wasserlöslich und gut abbaubar ist. Auch das benutzte Polyethylen ist für den Recycling-Prozeß unbedenklich, weil es sich von der Recycling-Papierpulpe auf herkömmliche Weise gut separieren läßt.

Die Erfindung ist nicht auf eine der vorbeschriebenen Ausführungsformen beschränkt, sondern in vielfältiger Weise abwandelbar. Man erkennt aber, daß zum Herstellen von Packmitteln insbesondere in Form flacher Weichplatten, die eine aus zerkleinertem Wellpappeabfall, Holz- oder Papierwolle u.dgl. gewonnene Füllung in einer verschlossenen Papierhülle enthalten, einem Wellpappeabfall vorzugsweise im Verhältnis 1:2 Papier beigemischt wird, das durch zumindest einen Schneidvorgang in schmälere Streifen von z.B. 1,5 cm bis 4,5 cm Länge zerkleinert und gewellt worden ist, worauf man die Mischung dosiert in die zuvor einseitig mit Polyethylen beschichtete Papierhülle bringt und diese durch Heißsiegeln verschließt. Die Papierumhüllung besteht aus einseitig glattem Kraftpapier mit einer Stärke von mindestens 40 g/m², das gegebenenfalls zuvor bedruckt wurde. Der Papierabfall kann in aufeinanderfolgenden Schneidvorgängen auf etwa gleiche Schnitzelgröße wie separat zugeführte Wellpappeabfälle zerkleinert werden, wobei die erhaltenen Papier- und Wellpappe-Schnitzel in einstellbarem Verhältnis gemischt, dosiert in oder auf eine Förderstrecke gebracht, zu elastisch-schmiegsamen Schnitzelkörpern vorgeformt und anschließend in einer abwischbaren Papierhülle eingeschlossen werden.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- A: Abfüllvorrichtung
- F: Förderstrecke
- H: Papierhülle
- M: Mischvorrichtung
- P: Papierschnitzel
- R1, R2: Schneidvorrichtungen
- S: Wellpappeschnitzel
- W: Schneidvorrichtung

## Patentansprüche

1. Verfahren zum Herstellen von insbesondere matten- oder kissenförmigen Packmitteln, die eine aus zerkleinertem Wellpappeabfall, Holz- oder Papierwolle u.dgl. gewonnene Füllung in einer verschlossenen Papierhülle enthalten, dadurch **gekennzeichnet**, daß dem Wellpappeabfall Papier beigemischt wird, das durch zumindest einen Schneidvorgang zerkleinert und gewellt worden ist, worauf man die Mischung dosiert in die zuvor wasserabweisend beschichtete Papierhülle bringt und diese verschließt.

2. Verfahren nach Anspruch 1, dadurch **gekennzeichnet**, daß das Mischungsverhältnis von Wellpappeabfällen und Papier zwischen 1:1 und 1:4, vorzugsweise bei etwa 1:2 liegt.

3. Verfahren nach Anspruch 1 oder 2, dadurch **gekennzeichnet**, daß das für die Papierhülle verwendete Papier mit Polyethylen beschichtet wird, insbesondere in einer spezifischen Schichtstärke von wenigstens 12 g/m².

4. Verfahren nach Anspruch 3, dadurch **gekennzeichnet**, daß die Beschichtung zumindest auf Teilflächen der Papierhülle erfolgt, bevorzugt einseitig, nämlich auf der Hüllen-Außenseite.

5. Verfahren nach einem der Ansprüche 1 bis 4, dadurch **gekennzeichnet**, daß für die Papierhülle einseitig glattes Kraftpapier mit einer Stärke von mindestens 40 g/m² verwendet wird.

6. Verfahren nach einem der Ansprüche 1 bis 5, dadurch **gekennzeichnet**, daß die Papierhülle durch Heißsiegeln verschlossen wird.

7. Verfahren nach einem der Ansprüche 1 bis 6, dadurch **gekennzeichnet**, daß die Papierhülle vor dem Befüllen bedruckt wird.

8. Verfahren nach einem der Ansprüche 1 bis 7, dadurch **gekennzeichnet**, daß dem Packmittel die allgemeine Form einer flachen Platte erteilt wird.

9. Verfahren nach einem der Ansprüche 1 bis 8, dadurch **gekennzeichnet**, daß die Papierstreifen in einander nachgeordneten Schneidwerken in lange Streifen mit einer Breite von z.B. 0,5 cm bis 1 cm zerteilt und anschließend auf eine Länge von z.B. 1,5 cm bis 4,5 cm geschnitten werden.

10. Verfahren zum Herstellen von insbesondere matten- oder kissenförmigen Packmitteln, die eine aus zerkleinertem Wellpappeabfall, Holz- oder Papierwolle u.dgl. gewonnene Füllung in einer verschlossenen Papierhülle enthalten, dadurch **gekennzeichnet**, daß Papierabfall in aufeinanderfolgenden Schneidvorgängen auf etwa gleiche Schnitzelgröße wie separat zugeführte Wellpappeschnitzel zerkleinert wird, daß die erhaltenen Papier- und Wellpappe-Schnitzel in einstellbarem Verhältnis gemischt, dosiert in oder auf eine Förderstrecke gebracht und zu elastisch-schmiegsamen Schnitzelkörpern vorgeformt werden und daß diese sodann in einer abwischbaren Papierhülle eingeschlossen werden.

11. Verfahren nach Anspruch 10, dadurch **gekennzeichnet**, daß in die laufend erzeugten und einer Förderstrecke insbesondere senkrecht zugeführten Papierstreifen bzw. -schnitzel durch einen Leimsprüh-Vorhang hindurch die Wellpappeschnitzel mit einem Querluftstrom eingeschossen werden und daß das Schnitzelgeschmisch in einem mit Formungsflächen, z.B. glatten Gleitblechen, versehenen Ablaufkanal zu Vorkörpern von Matten- oder Kissengestalt geformt wird, die abschnittsweise in der Papierhülle festgelegt werden, worauf diese versiegelt wird.
